# EUROPÄISCHE PATENTSCHRIFT

(11) **EP 0 906 211 B1**
(45) Veröffentlichungstag und Bekanntmachung des Hinweises auf die Patenterteilung: **18.09.2002**
(21) Anmeldenummer: 97928245.6
(22) Anmeldetag: 19.06.1997
(51) Int. Cl.: B60T 13/72, B60T 7/12, B60T 8/32

(54) **BREMSANLAGE FÜR KRAFTFAHRZEUGE**
BRAKING SYSTEM FOR MOTOR VEHICLES
SYSTEME DE FREINAGE POUR VEHICULES A MOTEUR

(30) Priorität: 19.06.1996 DE 19624376
(43) Veröffentlichungstag der Anmeldung: 07.04.1999
(73) Patentinhaber: Continental Teves AG & Co. oHG, 60488 Frankfurt (DE)
(72) Erfinder: BAYENS, Mark, D-60488 Frankfurt am Main (DE); ECKERT, Alfred, D-55129 Mainz-Hechtsheim (DE); BERTHOLD, Thomas, D-64289 Darmstadt (DE); PFEIFFER, Jürgen, D-61479 Glashütten (DE); KLESEN, Christof, D-64397 Modautal (DE)
(74) Vertreter: Dusil, Vladimir, Dipl.-Ing.
(86) Internationale Anmeldenummer: EP9703201
(87) Internationale Veröffentlichungsnummer: WO97048585

(56) Entgegenhaltungen:
- WO-A-93/24353
- WO-A-95/03196
- DE-A- 3 636 140

## Beschreibung

Die Erfindung betrifft eine Bremsanlage für Kraftfahrzeuge mit einer Betätigungseinheit, die aus einem pneumatischen Bremskraftverstärker sowie einem ihm nachgeschalteten Hauptbremszylinder besteht, an den Radbremsen angeschlossen sind, wobei das Steuerventil des Bremskraftverstärkers unabhängig vom Fahrerwillen mittels eines Elektromagneten ansteuerbar ist, durch dessen Anker einer der Steuerventil-Dichtsitze betätigbar ist, mit einem Bremsdruckregler, dem ein einem Soll-Bremsdruck entsprechendes Signal und ein einem Ist-Bremsdruck entsprechenden Signal zugeführt und dessen Ausgangsgröße einem Sollwert des dem Elektromagneten zuzuführenden elektrischen Stromes entspricht.

Eine derartige Bremsanlage ist aus der internationalen Patentanmeldung WO 95/03196 bekannt. Bei dem vorbekannten System wird die einem Sollweg des Elektromagnetankers entsprechende Ausgangsgröße des Bremsdruckreglers mit einem Signal verglichen, das dem Istweg des Elektromagnetankers entspricht, wobei die dem Vergleichsergebnis entsprechende Regeldifferenz einem die Position des Steuerventils beeinflussenden Lageregler zugeführt wird, dessen Ausgangsgröße den dem Elektromagneten zuzuführenden elektrischen Strom darstellt.

Weniger vorteilhaft ist bei dem vorbekannten System die Notwendigkeit der Verwendung des Lagereglers anzusehen, der in der Lage sein muß, sehr kurze Zykluszeiten zu realisieren, der deswegen einen komplizierten Aufbau aufweist und sehr teuer ist. Einen weiteren Kostenfaktor stellt der Wegsensor dar, der zur Sensierung des Betätigungsweges des elektromagnetisch betätigbaren Dichtsitzes erforderlich ist.

Es ist daher Aufgabe der vorliegenden Erfindung, Maßnahmen vorzuschlagen, die ein vollständiges Eliminieren der vorhin erwähnten Systemkomponenten und dadurch eine erhebliche Kostensenkung ermöglichen.

Diese Aufgabe wird erfindungsgemäß dadurch gelöst, daß der Bremsdruckregler durch eine Parallelschaltung einer das Sollbremdruck-Signal zu einem ersten Stromwert verarbeitenden elektronischen Steuerschaltung sowie einer Regelschaltung gebildet ist, die eine aus dem Sollbremsdruck-Signal sowie dem Istdruck-Signal gebildete Regeldifferenz zu einem zweiten Stromwert verarbeitet, wobei die Ausgangsgröße des Bremsdruckreglers durch Addition der beiden Stromwerte gebildet wird.

Vorteilhafte Weiterbildungen des Erfindungsgegenstandes sind in den Unteransprüchen 2 bis 14 aufgeführt.

weitere Einzelheiten, Merkmale und Vorteile der Erfindung gehen aus der nachfolgenden Beschreibung eines Ausführungsbeispiels unter Bezugnahme auf die beiliegende Zeichnung hervor, in der für einander entsprechende Einzelteile gleiche Bezugszeichen verwendet werden.

In der Zeichnung zeigt:
- Fig. 1: eine Ausführung der erfindungsgemäßen Bremsanlage in schematischer Darstellung;
- Fig. 2: die Steuergruppe des pneumatischen Bremskraftverstärkers nach Fig. 1 im Axialschnitt, teilweise weggebrochen;
- Fig. 3: den prinzipiellen Aufbau des Bremsdruckreglers in vereinfachter schematischer Darstellung;
- Fig. 4: ein Blockschaltbild des Bremsdruckreglers nach Fig. 3; und
- Fig. 5: ein Blockschaltbild eines dem Bremsdruckregler nach Fig. 3 bzw. 4 nachgeschalteten Stromreglers.

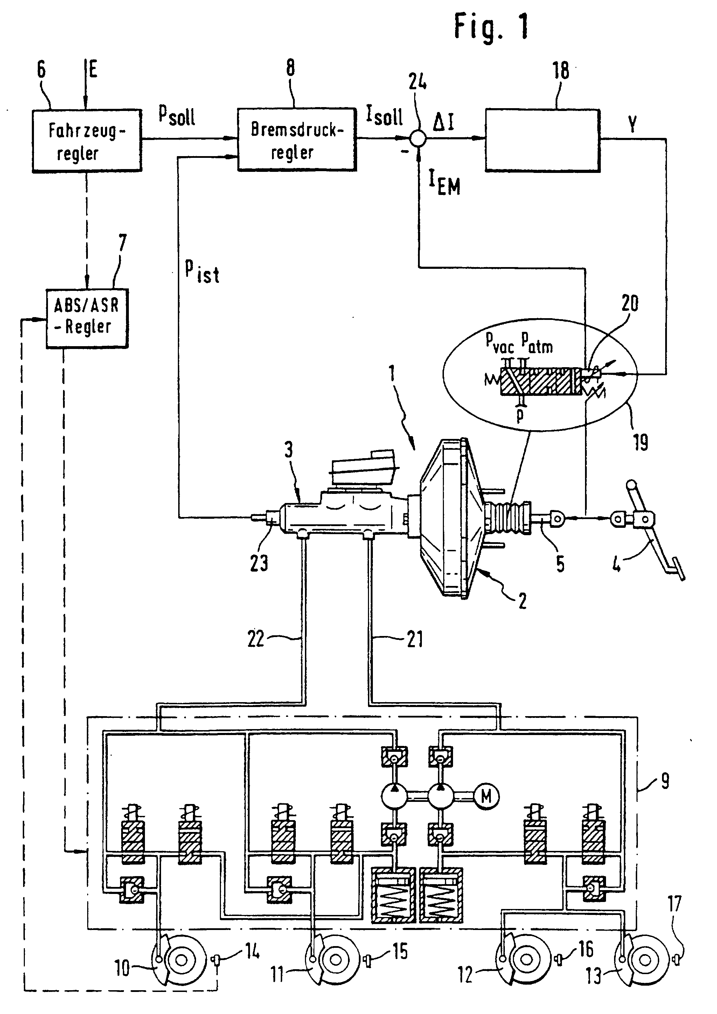

Die in Fig. 1 gezeigte erfindungsgemäße Bremsanlage für Kraftfahrzeuge besteht im wesentlichen aus einer Betätigungseinheit 1, einem elektronischen Fahrzeugregler 6, Radbremsen 10,11,12,13, einem zwischen Radbremsen 10 bis 13 und Betätigungseinheit 1 angeordneten Druckmodulator 9 sowie einem mit dem Fahrzeugregler 6 zusammenwirkenden ABS/ASR-Regler 7, der Steuersignale für den Druckmodulator 9 erzeugt. Jedem der nicht gezeigten Fahrzeugräder ist je ein Radsensor 14,15,16,17, zugeordnet, dessen der Radgeschwindigkeit entsprechendes Steuersignal dem ABS/ASR-Regler 7 zugeführt wird. Die Betätigungseinheit 1 besteht ihrerseits aus einem mittels eines Betätigungspedals 4 betätigbaren pneumatischen Bremskraftverstärker, vorzugsweise einem Unterdruck-Bremskraftverstärker 2, dem ein Hauptbremszylinder 3, vorzugsweise ein Tandemhauptzylinder, nachgeschaltet ist, dessen nichts gezeigte Druckräume über hydraulische Leitungen 21,22 mit dem Druckmodulator 9 in Verbindung stehen. An das Betätigungspedal 4 ist eine Betätigungsstange 5 angekoppelt, die eine Betätigung eines lediglich schematisch dargestellten Steuerventils 19 ermöglicht, das den Aufbau eines pneumatischen Differenzdruckes im Gehäuse des Unterdruck-Bremskraftverstärkers 2 steuert. Ein Elektromagnet 20 ermöglicht dabei eine Fremdbetätigung des Steuerventils 19.

Wie der Fig. 1 weiter zu entnehmen ist, ist dem Fahrzeugregler 6 ein zweiter elektronischer Regler (Bremsdruckregler) 8 nachgeschaltet, dem ein aufgrund eines beispielsweise von einem nicht gezeigten Abstandssensor gelieferten Eingangssignal E vom Fahrzeugregler 6 erzeugtes Soll-Bremsdrucksignal pₛₒₗₗ sowie ein Ist-Bremsdrucksignal pᵢₛₜ, das von der Betätigungseinheit 1 bzw. einem den im Hauptbremszylinder 3 herrschenden Druck erfassenden Drucksensor 23 geliefert wird, zugeführt werden. Das Ausgangssignal Iₛₒₗₗ des Bremsdruckreglers 8 entspricht dem gewünschten Sollwert des dem Elektromagneten 20 zuzuführenden elektrischen Stromes. Der Stromsollwert Iₛₒₗₗ wird in einer Vergleichsschaltung 24 mit einem dem Elektromagneten 20 zugeführten Strom-Istwert I_{EM} verglichen, wobei das Vergleichsergebnis ΔI in einem Stromregler 18 weiterverarbeitet wird, dessen Ausgangsgröße Y der Ansteuerung des Elektromagneten 20 dient.

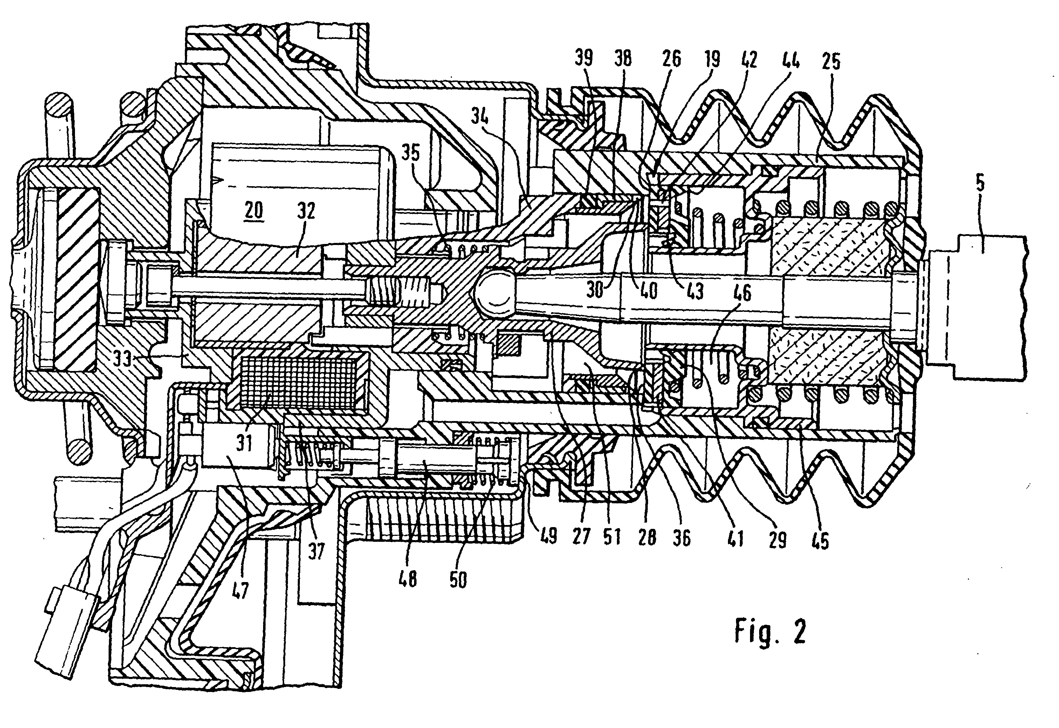

Wie insbesondere Fig. 2 zu entnehmen ist, ist das Steuerventil 19 in einem im Gehäuse des Bremskraftverstärkers 2 abgedichtet geführten Steuergehäuse 25 untergebracht und besteht aus einem am Steuergehäuse 25 ausgebildeten ersten Dichtsitz 26, einem an einem mit der Betätigungsstange 5 verbundenen Ventilkolben 27 ausgebildeten zweiten Dichtsitz 28 sowie einem mit beiden Dichtsitzen 26,28 zusammenwirkenden Ventilkörper 29.

Um eine von der Betätigungsstange 5 unabhängige Fremdbetätigung des Bremskraftverstärkers 2 einzuleiten, ist radial zwischen dem ersten (26) und dem zweiten Dichtsitz 28 ein dritter Dichtsitz 30 vorgesehen, der mittels des Elektromagneten 20 betätigbar ist, der vorzugsweise in einem mit dem Ventilkolben 27 fest verbundenen Gehäuse 37 angeordnet und demnach zusammen mit dem Ventilkolben 27 im Steuergehäuse 25 verschiebbar ist.

Der Elektromagnet 20 besteht aus einer innerhalb des Gehäuses 37 angeordneten Spule 31 sowie einem darin axial verschiebbar angeordneten zylindrischen Anker 32, der teilweise in einem das Gehäuse 25 verschließenden Verschlußteil 33 geführt wird und an dem sich eine Hülse 34 abstützt, die mit dem vorhin erwähnten dritten Dichtsitz 30 verbunden ist. Zwischen dem Ventilkolben 27 und der Hülse 34 ist eine Druckfeder 35 angeordnet, die den Anker 32 in seiner Ausgangslage hält, in der der dritte Dichtsitz 30 gegenüber dem am Ventilkolben 27 ausgebildeten zweiten Dichtsitz 28 axial versetzt angeordnet ist, so daß zwischen dem dritten Dichtsitz 30 und der Dichtfläche 36 des Ventilkörpers 29 ein Spalt vorhanden ist. Dabei ist ein vorzugsweise die Hülse 34 radial umgreifender Ring 38 vorgesehen, der unter Zwischenschaltung eines elastischen bzw. kompressiblen Elementes 39 sich an der Hülse 34 abstützt und andererseits an einem an der Hülse 34 ausgebildeten Anschlag axial anliegt, so daß zwischen ihm und der Hülse 34 eine Relativbewegung möglich ist. Der Ring 38 ist dabei bezüglich seiner Breite so ausgelegt, daß der Abstand seines dem Ventilkörper 29 zugewandten Randbereichs von der Dichtfläche 36 kleiner ist als der Abstand zwischen der Dichtfläche 36 und dem dritten Dichtsitz 30. Der erwähnte Randbereich weist axiale Durchbrüche 40 auf. Durch die beschriebene Gestaltung des dritten Dichtsitzes 30 wird in der Druckabbauphase während der Rücklaufbewegung des dritten Dichtsitzes 30 vom Ventilkörper 29 ein gesteuerter pneumatischer Druckausgleich zwischen Arbeitsund Unterdruckkammer des Bremskraftverstärkers bzw. eine Senkung der vom Elektromagneten 20 aufzubringenden Kraft ermöglicht.

Wie der Zeichnung weiter zu entnehmen ist, ist die mit den Dichtsitzen 26,28,30 zusammenwirkende ringförmige Dichtfläche 36 mittels einer metallischen Versteifungsscheibe 41 versteift und mit mehreren axialen Durchlässen 42 versehen. Außerdem weist der Ventilkörper 29 eine radial innen ausgebildete Dichtlippe 43 sowie eine radial außen ausgebildete zweite Dichtlippe 44 auf, die im montierten Zustand des Ventilkörpers 29 im Steuergehäuse 25 an einem den Ventilkörper 29 führenden Führungsteil 45 dichtend anliegen, so daß im Steuergehäuse 5 ein pneumatischer Raum 46 begrenzt ist. Die durch die Durchlässe 42 und Öffnungen in der Dichtfläche 36 gebildeten, näher nicht bezeichneten Strömungskanäle verbinden den pneumatischen Raum 46 mit einem durch die Dichtsitze 26,28 begrenzten Ringraum 51, so daß der auf der der Dichtfläche 36 abgewandten Seite des Ventilkörpers 29 ausgebildete pneumatische Raum 46 ständig mit der Arbeitskammer des Bremskraftverstärkers in Verbindung steht und am Ventilkörper 29 ein Druckausgleich stattfindet.

Die beschriebene Anordnung ermöglicht demnach eine Verringerung der Differenz zwischen der Ansprechkraft des Bremskraftverstärkers und der am Ventilkolben wirkenden Rückstellkraft in dem Sinne, daß bei einer gleichbleibenden Ansprechkraft eine Erhöhung der Rückstellkraft oder bei einer gleichbleibenden Rückstellkraft eine Verringerung der Ansprechkraft möglich ist, wodurch eine Verbesserung der Hysterese des erfindungsgemäßen Bremskraftverstärkers erreicht wird.

Bei der in der Zeichnung gezeigten Ausführung des erfindungsgemäßen Bremskraftverstärkers sind schließlich elektrische Schaltmittel 47, 48 vorgesehen, die insbesondere bei Bremsvorgängen wichtig sind, bei denen zusätzlich zur Fahrerbetätigung der Elektromagnet 20 angesteuert wird, um unabhängig vom Fahrerwillen eine Vollbremsung herbeizuführen (sog. Bremsassistentfunktion). Dabei ist von besonderer Bedeutung, daß die Schaltmittel 47, 48 bei jeder Bremsung betätigt werden. Gleichzeitig muß gewährleistet werden, daß der Elektromagnet 20 nach Beendigung des fremdkraftunterstützten Bremsvorganges sicher abgeschaltet wird. Die gezeigten Schaltmittel bestehen dabei aus einem vorzugsweise am Ventilkolben 27 bzw. dem Gehäuse 37 des Elektromagneten 20 befestigten, zwei Schaltstellungen auf weisenden Mikroschalter 47 sowie einem den Mikroschalter 47 durch eine translatorische Bewegung betätigenden Betätigungselement 48, das in einer im Steuergehäuse 25 vorgesehenen Bohrung abgedichtet geführt ist und mit einem verstärkergehäusefesten Anschlag zusammenwirkt, der das Bezugszeichen 49 trägt und beispielsweise durch einen radialen Kragen der hinteren Verstärkergehäushälfte gebildet sein kann. Zwischen dem Betätigungselement 48 und dem Steuergehäuse 5 ist eine Druckfeder 50 angeordnet, so daß das dem Mikroschalter 47 abgewandte Ende des Betätigungselements 48 unter einer Vorspannung am Anschlag 49 anliegt.

Die Grundfunktion des beschriebenen fremdbetätigbaren Unterdruckbremskraftverstärkers ist dem Fachmann bekannt und braucht deshalb nicht näher erläutert zu werden.

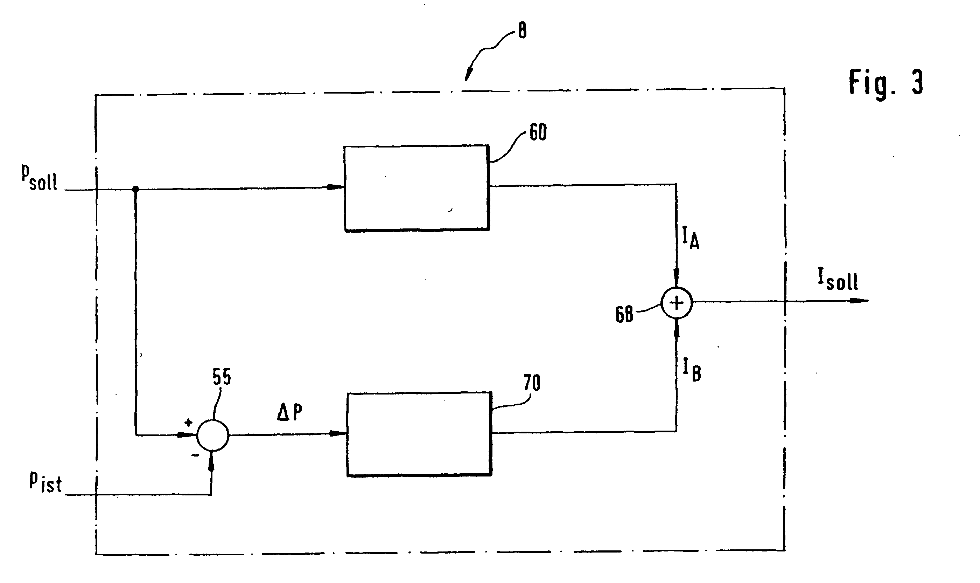

Der in Fig. 3 dargestellte prinzipielle Aufbau des erfindungsgemäßen Bremsdruckreglers 8 läßt erkennen, daß er durch eine Parallelschaltung einer elektronischen Steuerschaltung 60 sowie einer Regelschaltung 70 gebildet ist. Während die Steuerschaltung 60 das Sollbremsdruck-Signal Pₛₒₗₗ zu einem ersten Stromwert I_{A} verarbeitet, ist der Regelschaltung 70 eine Vergleichsschaltung 55 vorgeschaltet, in der eine Regeldifferenz ΔP aus dem Sollbremsdruck-Signal Pₛₒₗₗ und dem vom Drucksensor 23 (Fig. 1) gelieferten Istbremsdruck-Signal Pᵢₛₜ gebildet wird, die in der Regelschaltung 70 zu einem zweiten Stromwert I_{B} verarbeitet wird. Die Regelschaltung 70, die auf diese Art und Weise den im System herrschenden Istdruck berücksichtigt, dient dabei vorzugsweise der Eliminierung von Fehlern, die z. B. durch Unterdruck- oder Temperaturänderungen und Steuerungsunvollkommenheiten verursacht werden. Die beiden Stromwerte I_{A} und I_{B} werden in einem nachgeschalteten Summierer 68 addiert, dessen Ausgangsgröße in einem Begrenzer 73 zur Ausgangsgröße des Bremsdruckreglers 8 verarbeitet wird, die einen Strom-Sollwert Iₛₒₗₗ darstellt, der in der im Zusammenhang mit Fig. 1 erwähnten Vergleichsschaltung 24 mit dem dem Elektromagneten 20 zugeführten Strom-Istwert I_{EM} verglichen wird. Das Vergleichsergebnis ΔI wird als Eingangsgröße dem Stromregler 18 zugeführt.

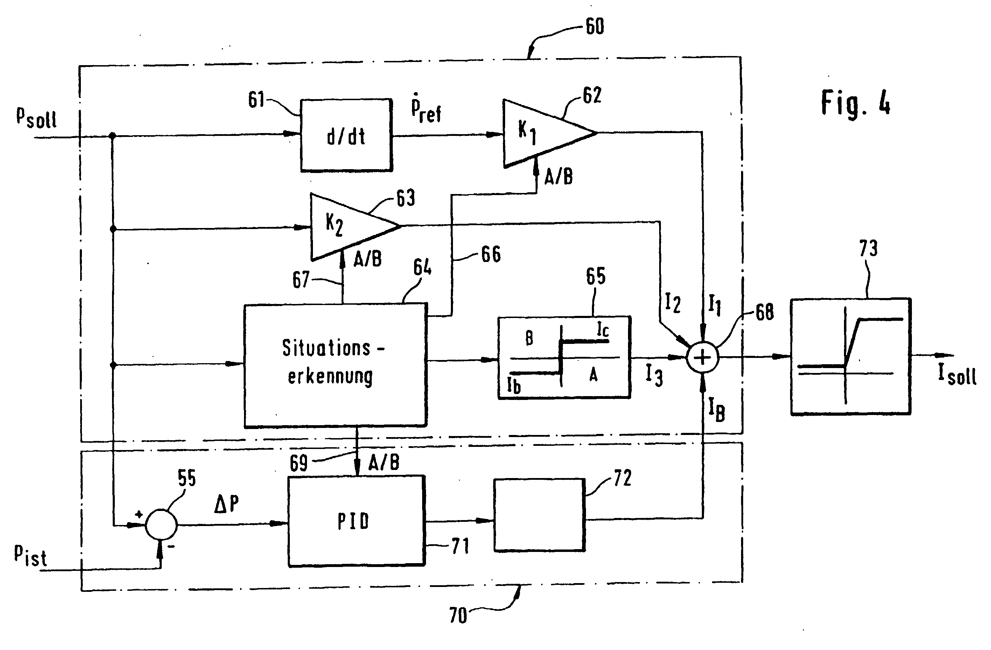

Fig. 4 zeigt ein Blockschaltbild der in Fig. 3 lediglich schematisch dargestellten Steuer- bzw. Regelstruktur. Die in Fig. 3 mit 60 bezeichnete Steuerschaltung 60 besteht im wesentlichen aus einem Differenzierer 61, zwei Verstärkern 62 und 63, einer Situationserkennungsschaltung 64 sowie einem nichtlinearen Übertragungsglied 65 mit einer Zweipunkt-Kennlinie. Dem Differenzierer 61, dem als Eingangsgröße das den Bremsdruck-Sollwert repräsentierende Signal Pₛₒₗₗ zugeführt wird und der der Bildung eines Sollbremsdruckgradienten dient, ist der erste Verstärker 62 nachgeschaltet, dessen Ausgangsgröße einen ersten Teilstromwert I₁ repräsentiert. Der der vorhin erwähnten Kombination Differenzierer 61 - Verstärker 62 parallelgeschaltete zweite Verstärker 63, der ebenfalls das den Bremsdruck-Sollwert repräsentierende Signal Pₛₒₗₗ als Eingangsgröße verwendet, erzeugt einen zweiten Teilstromwert I₂. Das Bremsdruck-Sollwertsignal Pₛₒₗₗ wird schließlich der Situationserkennungsschaltung 64 zugeführt, durch deren Ausgangssignal A/B der einem Druckaufbau bzw. einem Druckabbau entsprechende Bereich der Zweipunkt-Kennlinie des nichtlinearen Übertragungsglieds 65 ausgewählt wird, dessen Ausgangsgröße zwei Werte I_{b},I_{c} annehmen kann und einen dritten Teilstromwert I₃ darstellt. Der Wert I_{b} entspricht dabei der Druckabbauphase, während der Wert I_{c} die Druckaufbauphase repräsentiert. Die im Summierer 68 gebildete Summe der Teilstromwerte I₁, I₂ und I₃ entspricht dem im Zusammenhang mit Fig. 3 vorhin erwähnten ersten Stromwert I_{A}.

Die in Fig. 4 gestrichelt gezeichneten Signalwege 66, 67 zeigen an, daß die Verstärkungsfaktoren K₁, K₂ der beiden Verstärker 62, 63 durch das Ausgangssignal A/B der Situationserkennungsschaltung 64 beeinflußt bzw. so geändert werden können, daß sie zwei Werte annehmen, die der Druckauf- bzw. -abbauphase entsprechen.

Wie Fig. 4 schließlich noch zu entnehmen ist, besteht die im Zusammenhang mit Fig. 3 erwähnte Regelschaltung 70 im wesentlichen aus einem PID-Regler 71, dessen Verhalten (s.

Signalweg 69) durch Signale der Situationserkennungsschaltung 64 beeinflußbar ist. Der Verstärkungsfaktor des proportionalen (P-) Anteils des PID-Reglers 71 kann dabei unterschiedliche Werte in der Druckauf- und -abbauphase annehmen, während der integrale (I-) Anteil bei jedem Übergang von der Druckauf- zur Druckabbauphase bzw. der Druckabbau- zur Druckaufbauphase auf Null gesetzt wird. Um die bei der Ansteuerung des Elektromagneten 20 entstehenden Geräusche zu minimieren ist es sinnvoll, dem Verstärkungsfaktor des P-Anteils des PID-Reglers 71 einen niedrigen Wert zu verleihen und den P-Anteil einer zusätzlichen Filtrierung in einem dem PID-Regler 71 nachgeschalteten Filter 72 zu unterziehen. Außerdem haben Versuche gezeigt, daß hochfrequente Pₛₒₗₗ-Signale niedrigere Verstärkungsfaktoren des P-Anteils erfordern.
Um ein noch annehmbares Geräuschniveau bei den hochfrequenten Signalen zu erreichen muß deshalb der Verstärkungsfaktor des P-Anteils mit steigenden Sollbremsdruckgradienten reduziert werden. Dies kann beispielsweise mittels einer semilinearen Adaptationsfunktion realisiert werden.

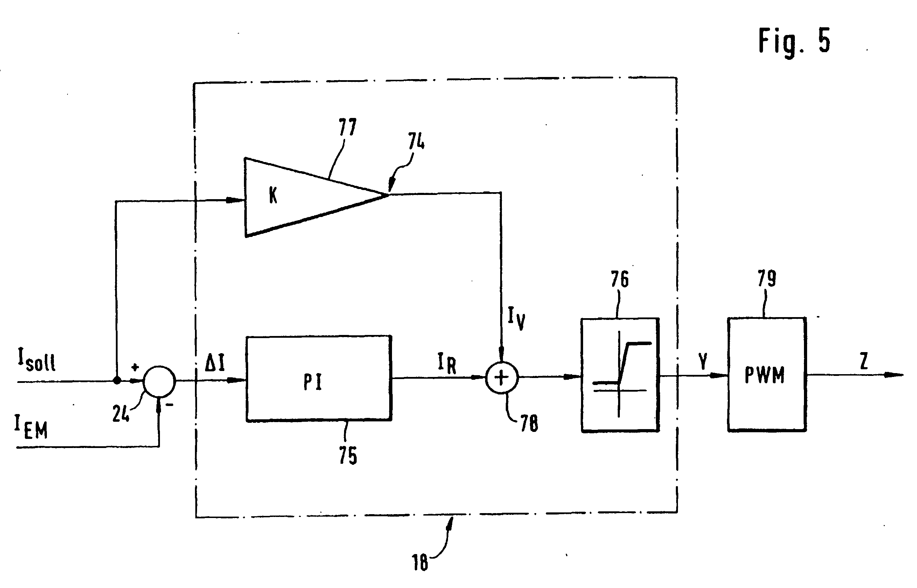

Aus Fig. 5 ist schließlich der Aufbau des dem Druckregler 8 nachgeschalteten Stromreglers 18 (Fig. 1) ersichtlich. Die dargestellte Regelstruktur besteht im wesentlichen aus einem Vorsteuerzweig 74, einem proportional-integrierenden (PI-) Regler 75 sowie einem Strombegrenzer 76. Der Vorsteuerzweig 74 wird durch einen Verstärker 77 gebildet, dem als Eingangsgröße das Ausgangssignal Iₛₒₗₗ des vorhin erläuterten Bremsdruckreglers 18 bzw. des Strombegrenzers 73 zugeführt wird. Der dem Vorsteuerzweig 74 parallelgeschaltete proportional-integrierende (PI-) Regler 75 verarbeitet die in der Vergleichsschaltung 24 gebildete Regelabweichung ΔI zu einem Ausgangssignal I_{R}, das in einem Summierer 78 zu dem Ausgangssignal I_{V} des Verstärkers 77 hinzuaddiert wird, wobei das Ergebnis der erwähnten Addition dem Strombegrenzer 76 zugeführt wird, dessen Ausgangsgröße Y (s. Fig. 1) in einer Pulsweitenmodulationsschaltung 79 in eine pulsweitenmodulierte (PWM) Größe Z umgesetzt wird, durch die der Elektromagnet 20 angesteuert wird. Selbstverständlich ist auch bei dem beschriebenen Stromregler 18 denkbar, dem PI-Regler 75 einen nicht gezeigten Filter nachzuschalten, der der Filtrierung des P-Anteils des PI-Reglers 75 dient.

Bezugszeichenliste
- 1: Betätigungseinheit
- 2: Bremskraftverstärker
- 3: Hauptbremszylinder
- 4: Betätigungspedal
- 5: Betätigungsstange
- 6: Fahrzeugregler
- 7: ABS/ASR-Regler
- 8: Bremsdruckregler
- 9: Druckmodulator
- 10: Radbremse
- 11: Radbremse
- 12: Radbremse
- 13: Radbremse
- 14: Radsensor
- 15: Radsensor
- 16: Radsensor
- 17: Radsensor
- 18: Stromregler
- 19: Steuerventil
- 20: Elektromagnet
- 21: Leitung
- 22: Leitung
- 23: Drucksensor
- 24: Vergleichsschaltung
- 25: Steuergehäuse
- 26: Dichtsitz
- 27: Ventilkolben
- 28: Dichtsitz
- 30: Dichtsitz
- 31: Spule
- 32: Anker
- 33: Verschlußteil
- 34: Hülse
- 35: Druckfeder
- 36: Dichtfläche
- 37: Gehäuse
- 38: Ring
- 39: Element
- 40: Durchbruch
- 41: Versteifungsscheibe
- 42: Durchlaß
- 43: Dichtlippe
- 44: Dichtlippe
- 45: Führungsteil
- 46: Raum
- 47: Mikroschalter
- 48: Betätigungselement
- 49: Anschlag
- 50: Druckfeder
- 51: Ringraum
- 52 53 54 55: Vergleichsschaltung
- 56 57 58 59 60: Steuerschaltung
- 61: Differenzierer
- 62: Verstärker
- 63: Verstärker
- 64: Situationserkennungsschaltung
- 65: Übertragungsglied
- 66: Signalweg
- 67: Signalweg
- 68: Summierer
- 69 70: Regelschaltung
- 71: PID-Regler
- 72: Filter
- 73: Strombegrenzer
- 74: Vorsteuerzweig
- 75: PI-Regler
- 76: Strombegrenzer
- 77: Verstärker
- 78: Summierer
- 79: PWM-Schaltung

## Patentansprüche

1. Bremsanlage für Kraftfahrzeuge mit einer Betätigungseinheit, die aus einem pneumatischen Bremskraftverstärker sowie einem ihm nachgeschalteten Hauptbremszylinder besteht, an den Radbremsen angeschlossen sind, wobei das Steuerventil des Bremskraftverstärkers unabhängig vom Fahrerwillen mittels eines Elektromagneten ansteuerbar ist, durch dessen Anker einer der Steuerventil-Dichtsitze betätigbar ist, mit einem Bremsdruckregler, dem ein einem Soll-Bremsdruck entsprechendes Signal und ein einem Ist-Bremsdruck entsprechenden Signal zugeführt und dessen Ausgangsgröße einem Sollwert des dem Elektromagneten zuzuführenden elektrischen Stromes entspricht, **dadurch gekennzeichnet, daß** der Bremsdruckregler (8) durch eine Parallelschaltung einer das Sollbremdruck-Signal (Pₛₒₗₗ) zu einem ersten Stromwert (I_{A}) verarbeitenden elektronischen Steuerschaltung (60) sowie einer Regelschaltung (70) gebildet ist, die eine aus dem Sollbremsdruck-Signal (Pₛₒₗₗ) sowie dem Istdruck-Signal (Pᵢₛₜ) gebildete Regeldifferenz (ΔP) zu einem zweiten Stromwert (I_{B}) verarbeitet, wobei die Ausgangsgröße (Iₛₒₗₗ) des Bremsdruckreglers (8) durch Addition der beiden Stromwerte (I_{A},I_{B}) gebildet wird.

2. Bremsanlage für Kraftfahrzeuge nach Anspruch 1, **dadurch gekennzeichnet, daß** die elektronische Steuerschaltung (60) durch eine Parallelschaltung
a) eines Differenzierers (61), dem ein erster Verstärker (62) nachgeschaltet ist und der einen ersten Teilstromwert (I₁) erzeugt,
b) eines zweiten Verstärkers (63), der einen zweiten Teilstromwert (I₂) erzeugt,
c) sowie einer Situationserkennungsschaltung (64), der ein nichtlineares Übertragungsglied (65) mit einer Zweipunkt-Kennlinie nachgeschaltet ist, das einen dritten Teilstromwert (I₃) erzeugt, gebildet ist, wobei der erste Stromwert (I_{A}) durch Addition der Teilstromwerte (I₁,I₂,I₃) gebildet wird.

3. Bremsanlage für Kraftfahrzeuge nach Anspruch 1, **dadurch gekennzeichnet, daß** die Regelschaltung (70) durch einen PID-Regler (71) gebildet ist.

4. Bremsanlage nach Anspruch 3 **dadurch gekennzeichnet, daß** dem PID-Regler (71) ein Filter (72) nachgeschaltet ist.

5. Bremsanlage nach Anspruch 2 **dadurch gekennzeichnet, daß** die Verstärkungsfaktoren (K₁,K₂) der Verstärker (62,63) in Abhängigkeit vom Zustand der Situationserkennungsschaltung (64) einstellbar sind.

6. Bremsanlage nach Anspruch 5 **dadurch gekennzeichnet, daß** die Verstärkungsfaktoren (K₁,K₂) zwei Werte annehmen können.

7. Bremsanlage nach einem der vorhergehenden Ansprüche **dadurch gekennzeichnet, daß** die Summe der beiden Stromwerte (I_{A},I_{B}) einem Begrenzer (73) zugeführt wird.

8. Bremsanlage nach einem der vorhergehenden Ansprüche **dadurch gekennzeichnet, daß** Mittel (38,39,40) vorgesehen sind, die in der Druckabbauphase des Bremskraftverstärkers (2) während der Rücklaufbewegung des durch den Elektromagneten (20) betätigbaren elektromechanisch Dichtsitzes (30) vom Ventilkörper (29) einen gesteuerten pneumatischen Druckausgleich zwischen Arbeits- und Unterdruckkammer des Bremskraftverstärkers (2) ermöglichen.

9. Bremsanlage nach einem der vorhergehenden Ansprüche **dadurch gekennzeichnet, daß** der Ventilkörper (29) in einem das Steuerventil (19) aufnehmenden Steuergehäuse (25) einen pneumatischen Raum (46) begrenzt, der mit dem in der Arbeitskammer des Bremskraftverstärkers (2) herrschenden pneumatischen Druck beaufschlagbar ist und daß die Verbindung zwischen dem pneumatischen Raum (46) und der Arbeitskammer mittels mindestens eines Durchlasses (42) erfolgt, der im Bereich einer Dichtfläche(36) des Ventilkörpers (29) ausgebildet ist.

10. Bremsanlage nach einem der vorhergehenden Ansprüche **dadurch gekennzeichnet, daß** die Ausgangsgröße (Iₛₒₗₗ) des Bremsdruckreglers (8) in einem Summierer (24) mit einem einem Istwert des dem Elektromagneten (20) zuzuführenden elektrischen Stromes entsprechenden Signal (I_{EM}) verglichen wird, wobei die dem Vergleichsergebnis entsprechende Regeldifferenz (ΔI) einem Stromregler (18) zugeführt wird, dessen Ausgangsgröße (Y) dem dem Elektromagneten (20) zuzuführenden elektrischen Strom entspricht.

11. Bremsanlage nach Anspruch 10 **dadurch gekennzeichnet, daß** der Stromregler (18) als ein PI-Regler (75) ausgebildet ist.

12. Bremsanlage nach Anspruch 11 **dadurch gekennzeichnet, daß** dem PI-Regler (75) ein Verstärker (77) parallelgeschaltet ist, dem die Ausgangsgröße (Iₛₒₗₗ) des Bremsdruckreglers (8) direkt zugeführt wird und dessen Ausgangsgröße (I_{V}) zur Ausgangsgröße (I_{R}) des PI-Reglers (75) hinzuaddiert wird, wobei das Additionsergebnis dem Elektromagneten (20) zugeführt wird.

13. Bremsanlage nach Anspruch 11 oder 12 **dadurch gekennzeichnet, daß** dem PI-Regler (75) ein Strombegrenzer (76) nachgeschaltet ist.

14. Bremsanlage nach einem der Ansprüche 10 bis 13 **dadurch gekennzeichnet, daß** die Ausgangsgröße (Y) des Stromreglers (18) in eine pulsweitenmodulierte Größe (Z) umgesetzt wird.

## Claims

1. A brake system for motor vehicles with an actuating unit that is made up of a pneumatic brake force booster as well as a master brake cylinder located downstream of the booster, with such master brake cylinder having wheel brakes connected to it, wherein the control valve of the brake force booster can be actuated independently of the driver's actions by means of an electromagnet, whose armature can actuate one of the control valve's sealing seats, and with a brake pressure controller, to which a signal corresponding to a nominal brake pressure and a signal corresponding to the actual brake pressure are supplied and whose output variable corresponds to a nominal value of the electric current to be supplied to the electromagnet, **characterized in that** the brake pressure controller (8) is formed by connecting in parallel an electromagnetic control circuit (60) that processes the nominal brake pressure signal (Pₙₒₘᵢₙₐₗ) into a first current value (I_{A}) and a control circuit (70) that processes a control difference (ΔP) formed from the nominal brake pressure signal (Pₙₒₘᵢₙₐₗ) and the actual pressure signal (P_{actual}) into a second current value (I_{B}), with the output variable (Iₙₒₘᵢₙₐₗ) of the brake pressure controller (8) being formed by addition of the two current values (I_{A}, I_{B}).

2. A brake system for motor vehicles according to Claim 1, **characterized in that** the electronic control circuit (60) is formed by connecting in parallel
a) a differentiator (61), which has a first booster (62) disposed downstream of it and which generates a first partial current value (I₁);
b) a second booster (63), which generates a second partial current value (I₂); as well as
c) a situation detection circuit (64), which has a nonlinear transfer element (65) with a two-point characteristic curve disposed downstream of it, with such element generating a third partial current value (I₃), wherein the first current value (I_{A}) is formed by adding the partial current values (I₁, I₂, I₃).

3. A brake system for motor vehicles according to Claim 1, **characterized in that** the control circuit (70) is made up of a PID controller (71).

4. A brake system according to Claim 3, **characterized in that** a filter (72) is disposed downstream of the PID controller (71).

5. A brake system according to Claim 2, **characterized in that** the amplification factors (K₁, K₂) of the boosters (62, 63) can be adjusted depending on the state of the situation detection circuit (64).

6. A brake system according to Claim 5, **characterized in that** the amplification factors (K₁, K₂) can assume two values.

7. A brake system according to one of the preceding claims, **characterized in that** the sum of the two current values (I_{A}, I_{B}) is supplied to a current limiter (73).

8. A brake system according to one of the preceding claims, **characterized in that** means (38, 39, 40) are provided which enable a controlled pneumatic pressure compensation between the working chamber and the vacuum chamber of the brake force booster (2) during the pressure reduction phase of the brake force booster (2) as the third sealing seat (30), which is electromagnetically actuatable by the electromagnet (20), travels back from the valve body (29).

9. A brake system according to one of the preceding claims,
**characterized in that** the valve body (29) delimits a pneumatic space (46) in a control housing (25) which accommodates the control valve (19), wherein this pneumatic space (46) can be pressurized with the pneumatic pressure prevailing in the working chamber of the brake force booster (2), and **in that** the pneumatic space (46) and the working chamber are connected by at least one outlet (42), which is provided near a sealing surface (36) of the valve body (29).

10. A brake system according to one of the preceding claims, **characterized in that** the output variable (Iₙₒₘᵢₙₐₗ) of the brake force controller (8) is compared with a signal (I_{EM}), which corresponds to the actual value of the electric current to be supplied to the electromagnet (20), in an adder (24), with the result of the comparison - i.e., the control difference (ΔI) - being furnished to a current regulator (18), whose output variable (Y) corresponds to the electric current to be supplied to the electromagnet (20).

11. A brake system according to Claim 10, **characterized in that** the current regulator (18) is designed as a PI controller (75).

12. A brake system according to Claim 11, **characterized in that** the PI controller (75) is connected in parallel to a booster (77), to which the output value (Iₙₒₘᵢₙₐₗ) of the brake force controller (8) is supplied directly and whose output variable (Iᵥ) is added to the output variable (I_{R}) of the PI controller (75), with the result of the addition being supplied to the electromagnet (20).

13. A brake system according to Claim 11 or Claim 12, **characterized in that** a current limiter (76) is disposed downstream of the PI controller (75).

14. A brake system according to one of Claims 10 to 13, **characterized in that** the output variable (Y) of the current regulator (18) is converted into a pulse-width modulated value (Z).

## Revendications

1. Dispositif de freinage, pour véhicule automobile, comprenant une unité d'actionnement, qui est constituée d'un amplificateur pneumatique de force de freinage et d'un maître-cylindre de frein, disposé en aval de celui-ci, auquel des freins de roue sont raccordés, la valve de commande de l'amplificateur de force de freinage pouvant être commandée, indépendamment de la volonté du conducteur, à l'aide d'un électro-aimant au moyen de l'armature mobile duquel l'un des sièges d'étanchéité de valve de commande peut être actionné, et un régulateur de pression de frein auquel un signal correspondant à une pression de frein de consigne et un signal correspondant à une pression de frein réelle sont envoyés et dont une grandeur de sortie correspond à une valeur de consigne du courant électrique devant être envoyé à l'électro-aimant, **caractérisé en ce que** le régulateur de pression de frein (8) est constitué par un montage parallèle d'un circuit de commande (60) électronique, traitant le signal de pression de frein de consigne (pₛₒₗₗ) pour donner une première valeur de courant (I_{A}), et d'un circuit de régulation (70) qui traite une différence de régulation (ΔP), formée à partir du signal de pression de frein de consigne (pₛₒₗₗ) et du signal de pression réelle (pᵢₛₜ), pour donner une seconde valeur de courant (I_{B}), la grandeur de sortie (Iₛₒₗₗ) du régulateur de pression de frein (8) étant formée par addition des deux valeurs de courant (I_{A}, I_{B}).

2. Dispositif de freinage pour véhicule automobile suivant la revendication 1, **caractérisé en ce que** le circuit de commande électronique (60) est constitué d'un montage parallèle
a) d'un différentiateur (61), en aval duquel un premier amplificateur (62) est connecté et qui produit une première valeur de courant partiel (I₁),
b) un second amplificateur (63), qui produit une deuxième valeur de courant partiel (I₂) et
c) un circuit de constatation de situation (64) en aval duquel est connecté un organe de transmission non linéaire (65), à ligne caractéristique à deux niveaux, qui produit une troisième valeur de courant partiel (I₃), la première valeur de courant (I_{A}) étant formée par addition des valeurs de courant partiel (I₁, I₂, I₃).

3. Dispositif de freinage pour véhicule automobile suivant la revendication 1, **caractérisé en ce que** le circuit de régulation (70) consiste en un régulateur PID (71).

4. Dispositif de freinage suivant la revendication 3, **caractérisé en ce qu'**un filtre (72) est connecté en aval du régulateur PID (71).

5. Dispositif de freinage suivant la revendication 2, **caractérisé en ce que** les facteurs d'amplification (K₁, K₂) des amplificateurs (62, 63) peuvent être réglés en fonction de l'état du circuit de constatation de situations (64).

6. Dispositif de freinage suivant la revendication 5, **caractérisé en ce que** les facteurs d'amplification (K₁, K₂) peuvent prendre deux valeurs.

7. Dispositif de freinage suivant l'une des revendications précédentes, **caractérisé en ce que** la somme des deux valeurs de courant (I_{A}, I_{B}) est envoyée à un limiteur (73).

8. Dispositif de freinage suivant l'une des revendications précédentes, **caractérisé en ce qu'**il est prévu des moyens (38, 39, 40) qui, dans la phase de suppression de pression de l'amplificateur de force de freinage (2) pendant le déplacement de recul du siège d'étanchéité (30) électromécanique, pouvant être actionné par l'électro-aimant (20), vis-à-vis de l'obturateur (29), permettent un équilibre de pression pneumatique commandée entre la chambre de travail et la chambre de dépression de l'amplificateur de force de freinage (2).

9. Dispositif de freinage suivant l'une des revendications précédentes, **caractérisé en ce que** l'obturateur (29) délimite, dans un boîtier de commande (25) servant à loger la valve de commande (19), un espace pneumatique (46) qui peut être soumis à l'action de la pression pneumatique régnant dans la chambre de travail de l'amplificateur de force de freinage (2) et **en ce que** la liaison entre l'espace pneumatique (46) et la chambre de travail a lieu au moyen d'au moins un passage (42) qui est réalisé dans la zone d'une surface d'étanchéité (36) de l'obturateur (29).

10. Dispositif de freinage suivant l'une des revendications précédentes, **caractérisé en ce que** la grandeur de sortie (Iₛₒₗₗ) du régulateur de pression de frein (8) est comparée dans un additionneur (24) à un signal (I_{EM}) correspondant à une valeur réelle du courant électrique devant être envoyé à l'électro-aimant (20), la différence de régulation (ΔI) correspondant au résultat de comparaison étant envoyée à un régulateur de courant (18) dont la grandeur de sortie (Y) correspond au courant électrique devant être envoyé à l'électro-aimant (20).

11. Dispositif de freinage suivant la revendication 10, **caractérisé en ce que** le régulateur de courant (18) est réalisé sous forme d'un régulateur PI (75).

12. Dispositif de freinage suivant la revendication 11, **caractérisée en ce qu'**il est prévu, connecté en parallèle au régulateur PI (75), un amplificateur (77) auquel la grandeur de sortie (Iₛₒₗₗ) du régulateur de pression de frein (8) est directement envoyée et dont la grandeur de sortie (I_{V}) est ajoutée à la grandeur de sortie (I_{R}) du régulateur PI (75), le résultat d'addition étant envoyé à l'électro-aimant (20).

13. Dispositif de freinage suivant la revendication 11 ou 12, **caractérisé en ce qu'**un limiteur de courant (76) est connecté en aval du régulateur PI (75).

14. Dispositif de freinage suivant l'une des revendications 10 à 13, **caractérisé en ce que** la grandeur de sortie (Y) du régulateur de courant (18) est transformée en une grandeur (Z) modulée en largeur d'impulsions.
